(19) Europäisches Patentamt
European Patent Office
Office européen des brevets

(11) **EP 3 782 741 B1**

(12) **EUROPEAN PATENT SPECIFICATION**

(45) Date of publication and mention
of the grant of the patent:
**20.12.2023 Bulletin 2023/51**

(21) Application number: **19192574.2**

(22) Date of filing: **20.08.2019**

(51) International Patent Classification (IPC):
***B08B 1/00*** *(2006.01)*

(52) Cooperative Patent Classification (CPC):
**B08B 1/00; B08B 1/006**

(54) **METHODS OF REDUCING BIOFILM AND/OR PLANKTONIC CONTAMINATION**

VERFAHREN ZUR VERRINGERUNG VON BIOFILMBILDUNG UND/ODER
PLANKTONKONTAMINATION

PROCÉDÉS DE RÉDUCTION DE CONTAMINATION DE BIOFILM ET/OU DE CONTAMINATION
PLANCTONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.02.2021 Bulletin 2021/08**

(73) Proprietor: **The Procter & Gamble Company
Cincinnati, OH 45202 (US)**

(72) Inventors:
  • **FITZGERALD, Jamie
    Cincinnati, Ohio 45202 (US)**
  • **SHERRY, Alan Edward
    Cincinnati, Ohio 45202 (US)**
  • **PORTER, Julie Marie
    Cincinnati, OH 45202 (US)**
  • **POLICICCHIO, Nicola John
    Cincinnati, Ohio 45202 (US)**

  • **IBERI, Vighter
    Cincinnati, Ohio 45202 (US)**
  • **PALACIOMANCHENO, Paolo Efrain
    Cincinnati, Ohio 45202 (US)**
  • **DUFRESNE, Tom Edward
    Cincinnati, OH 45202 (US)**
  • **BAO, Hailing
    Cincinnati, Ohio 45202 (US)**
  • **DE BEER, Antonius Lambertus
    Cincinnati, Ohio 45202 (US)**

(74) Representative: **P&G Patent Belgium UK
N.V. Procter & Gamble Services Company S.A.
Temselaan 100
1853 Strombeek-Bever (BE)**

(56) References cited:
  **WO-A1-2018/005461     US-A1- 2016 250 668
  US-B2- 6 797 357       US-B2- 9 833 118**

**Description**

FIELD OF THE INVENTION

The present invention relates to a method for reducing biofilm and/or planktonic contamination from a surface using a fibrous structure and water.

BACKGROUND OF THE INVENTION

Biofilm and planktonic contamination of surfaces by undesired microorganisms can be a problem. Harsh chemicals can be used to reduce or remove biofilm and planktonic contamination from surfaces. There is a need to provide more gentle methods to remove biofilm and planktonic contamination.

The document US 2016/250668 A1 discloses a method of reducing biofilm and/or planktonic contamination from a surface using a fibrous structure.

SUMARY OF THE INVENTION

The present invention relates to a method of reducing biofilm and/or planktonic contamination from a surface. The method comprises the steps of:

i) applying water to the surface or to a fibrous structure wherein the water comprises less than 5% by weight of chemicals apart from those coming from the water supply; and
ii) wiping the surface with the fibrous structure.

The fibrous structure is either:

a) a two-dimensional fibrous structure comprising a core and a scrim wherein the core component is more hydrophilic than the scrim; or
b) a three-dimensional fibrous structure comprising a sheet and a gather strip element joined to the sheet, the gather strip element comprising plural superimposed layers folded upon one another, a plurality of said layers having strips extending outwardly.

The fibrous structure can be used damp with water, or with moisture disbursed or sprayed onto the fibrous structure or onto the surface. The water is free of added chemicals, apart from those coming from the water supply. By free of added chemicals is herein meant that the water comprises less than 5%, preferably less than 2% and specially less than 1% by weight of chemicals apart from those coming from the water supply.

The method of the invention is safe for the user and the environment as harsh chemicals are not needed to improve hygiene with the added benefits of having less chemical exposure during use, no chemical residues on the surfaces post-use, less corrosivity or damage to the surfaces, safe for food preparation areas, etc.

The method of the invention also allows for lower antimicrobial stress on the microbiomes of the environment and its residents as harsh antimicrobial chemicals (e.g. sodium hypochlorite and other oxidizers, quaternary ammonium compounds, etc.) that might be implicated in the strengthening of microbial defense mechanisms (e.g. increased level of biofilm slime, toxin production, and enhanced motility) and development or evolution of resistance are not used or needed.

The method of the invention provides significant reductions in planktonic and biofilm bioburdens from hard and soft surfaces, including inanimate and animate surfaces (skin, fur, feathers, etc), reductions in the cross-contamination or transfer of bioburden to fresh surfaces in cleaning, reductions in hand contamination during cleaning thereby decreasing spread of microbes to others and the environment and increased ability to lock or retain the microbial bioburden within the substrate for safer disposal and more hygienic garbage management.

The method of the invention seems to inhibit the transfer of bacteria to hands.

By" two-dimensional fibrous structure" is herein meant a fibrous structure which is primarily two-dimensional (i.e. in an XY plane) and whose thickness (in a Z direction) is relatively small (i.e. 1/10 or less) in comparison to the substrate's length (in an X direction) and width (in a Y direction). By" three-dimensional fibrous structure" is herein meant a fibrous structure which is primarily three-dimensional and whose thickness (in a Z direction) is not too small (i.e. 1/9 or more) in comparison to the substrate's length (in an X direction) and width (in a Y direction).

DETAILED DESCRIPTION OF THE INVENTION

Two-Dimensional Fibrous Structure

The two-dimensional fibrous structure comprises a core and a scrim. Preferably, the core is surrounded by two scrims. Preferably the core component is more hydrophilic, i.e. absorb more water as measured using the method detailed herein below, than the scrim. Preferably, the core is hydrophilic and the scrim is hydrophobic. Without being bound by theory, it is believed that the hydrophobicity of the scrim increases depth of biofilm acquisition trapping bacteria and the hydrophilicity of the core component increases attraction force for biofilm, locking bacteria, like a one-way valve.

Hydrophilic vs hydrophobic properties may be measured as follows. A 1 gram sample of material, is oven dried at about 110°C for 12 hours, then conditioning at 65% relative humidity / 21°C for five days. The sample is then re-dried at 110°C for 12 hours. The amount of moisture gained is measured as a percentage of moisture regained:

$$\text{moisture regained} = [(\text{total conditioned sample weight at 65\% RH - sample weight after drying}) \div \text{dried sample weight}] \times 100\%.$$

As used herein, hydrophilic material has a moisture regain at 65% greater than about 2%, 3%, 4%, 5% and preferably greater than about 6%. As used herein, hydrophobic material has a moisture regain at 65% lower than about 1%, 0.8%, lower than 0.5%.

Core

The core is the component that usually exhibits the greatest basis weight with the fibrous structure of the present invention. Preferably, the core exhibits a basis weight of greater than 50 gsm, more preferably greater than 60 gsm and less than 200 gsm as measured according to the Fibrous Structure Basis Weight Test Method described herein.

Preferably the core components present in the fibrous structures exhibit a basis weight that is greater than 50% and/or greater than 55% and/or greater than 60% and/or greater than 65% and/or greater than 70% and/or less than 98% and/or less than 95% and/or less than 90% of the total basis weight of the fibrous structure of the present invention as measured according to the Fibrous Structure Basis Weight Test Method described herein.

Preferably, the core comprises a plurality of filaments and a plurality of solid additives. The solid additives may be comprised of any natural, cellulosic, and/or wholly synthetic material. Examples of natural fibers may include cellulosic natural fibers, such as fibers from hardwood sources, softwood sources, or other non-wood plants. The natural fibers may comprise cellulose, starch and combinations thereof. Non-limiting examples of suitable cellulosic natural fibers include wood pulp, typical northern softwood Kraft, typical southern softwood Kraft, typical CTMP, typical deinked, corn pulp, acacia, eucalyptus, aspen, reed pulp, birch, maple, radiata pine and combinations thereof. Other sources of natural fibers from plants include albardine, esparto, wheat, rice, corn, sugar cane, papyrus, jute, reed, sabia, raphia, bamboo, sidal, kenaf, abaca, sunn, rayon (also known as viscose), lyocell, cotton, hemp, flax, ramie and combinations thereof. Yet other natural fibers may include fibers from other natural non-plant sources, such as, down, feathers, silk, cotton and combinations thereof. The natural fibers may be treated or otherwise modified mechanically or chemically to provide desired characteristics or may be in a form that is generally similar to the form in which they can be found in nature. Mechanical and/or chemical manipulation of natural fibers does not exclude them from what are considered natural fibers with respect to the development described herein. Preferably the core comprises pulp, more preferably cellulosic pulp.

The core preferably comprises filaments, the filaments can be made of any material, such as those selected from the group consisting of polyesters (e.g., polyethylene terephthalate), polyolefins, polypropylenes, polyethylenes, polyethers, polyamides, polyesteramides, polyvinylalcohols, polyhydroxyalkanoates, polysaccharides, and combinations thereof. The filaments may be treated before, during, or after manufacture to change any desired properties of the fibers. The substrate may comprise hydrophilic fibers, hydrophobic fibers, or a combination thereof. The core preferably comprises polypropylene. Non-limiting examples of suitable polypropylenes for making the filaments of the present invention are commercially available from Lyondell-Basell and Exxon-Mobil.

Preferably, the core comprises pulp, preferably cellulosic pulp and a polymer, preferably polypropylene. Preferably the pulp and the polymer are in a weight ratio of from about 60:40 to about 90:10.

The core can comprise spiral glue. This seems to aids the core in further spreading and locking biofilm and planktonic contamination through the whole fibrous structure, creating a pathway and deposition areas for bacteria.

The core can be a coform fibrous structure comprising a plurality of filaments and a plurality of solid additives, for example pulp fibers.

The core can be in the form of a consolidated region. "Consolidated region" as used herein means a region within a fibrous structure where the filaments and optionally the solid additives have been compressed, compacted, and/or packed together with pressure and optionally heat (greater than 150°F) to strengthen the region compared to the same region in its unconsolidated state or a separate region which did not see the compression or compacting pressure. A region can be consolidated by forming unconsolidated regions within a fibrous structure on a patterned molding member and passing the unconsolidated regions within the fibrous structure while on the patterned molding member through a pressure nip, such as a heated metal anvil roll (about 275°F) and a rubber anvil roll with pressure to compress the unconsolidated regions into one or more consolidated regions. In one example, the filaments present in the consolidated region, for example on the side of the fibrous structure that is contacted by the heated roll comprises fused filaments that create a skin on the surface of the fibrous structure, which may be visible via SEM images.

Scrim

The fibrous structure of the present invention further comprises a scrim. "Scrim" as used herein means a fibrous structure comprising a plurality of filaments. Preferably, the scrim presents in the fibrous structures exhibits a basis weight that is less than 25%, more preferably less than 20%, more preferably less than 10% and greater than 1% of the total basis weight of the fibrous structure of the present invention as measured according to the Fibrous Structure Basis Weight Test Method described herein. In another example, the scrim component exhibits a basis weight of from about 2 gsm to 20 gsm, preferably from about 3 gsm to less than 15 gsm, more preferably from about 5 gsm to less than 12 gsm as measured according to the Fibrous Structure Basis Weight

Test Method Described Herein.

The filaments of the scrim can be the same or different from those of the core. The filaments can be made of any material, such as those selected from the group consisting of polyesters (e.g., polyethylene terephthalate), polyolefins, polypropylenes, polyethylenes, polyethers, polyamides, polyesteramides, polyvinylalcohols, polyhydroxyalkanoates, polysaccharides, and combinations thereof. The filaments may be treated before, during, or after manufacture to change any desired properties of the fibers. The substrate may comprise hydrophilic fibers, hydrophobic fibers, or a combination thereof. The scrim preferably comprises polypropylene. Non-limiting examples of suitable polypropylenes for making the filaments of the present invention are commercially available from Lyondell-Basell and Exxon-Mobil.

The fibrous structure may comprise a scrubby component. As used herein an "scrubby component" means that part of the fibrous structure that imparts the scrubby quality to the fibrous structure. The scrubby component is distinct and different from the core and scrim components even though the scrubby component may be present in and/or on the core and scrim components. The scrubby component may be a feature, such as a pattern, for example a surface pattern, or texture that causes the fibrous structure to exhibit a scrubby property during use by a consumer. In another example, the scrubby component may be a material, for example a coarse filament (exhibits a greater average diameter than the majority of filaments within the core and/or scrim components). In one example, the scrubby component is a fibrous structure comprising a plurality of filaments. In one example, the total scrubby components present in the fibrous structures of the present invention exhibit a basis weight that is less than 25% and/or less than 20% and/or less than 15% and/or less than 10% and/or less than 7% and/or less than 5% and/or greater than 0% and/or greater than 1% of the total basis weight of the fibrous structure of the present invention as measured according to the Fibrous Structure Basis Weight Test Method described herein.

The surface of the fibrous structure can be embossed. Without wishing to be bound by theory embossing patterns contribute to a more efficient depth and radial distribution of biofilm and planktonic contamination. Embossing give rise to an increased surface area for multiple sinks and pathways for biofilm and planktonic contamination to permeate and distribute throughout the entire fibrous structure.

Preferably, the fibrous structure is a double ply structure. This increases the total volume of absorbed biofilm and planktonic contamination compared to 1-ply.

Fibrous Structure Basis Weight Test Method

Basis weight is measured prior to the application of any end-use lotion, cleaning solution, or other liquid composition, etc. to the fibrous structure or wipe, and follows a modified EDANA 40.3-90 (February 1996) method as described herein below.

1. Cut at least three test pieces of the fibrous structure or wipe to specific known dimensions using a pre-cut metal die and die press. Each test piece is cut to have an area of at least 0.01 m$^2$.
2. Use a balance to determine the mass of each test piece in grams; calculate basis weight (mass per unit area), in grams per square meter (gsm), using equation (1).

$$Basis\,Weight = \frac{Mass\,of\,Test\,Piece\,(g)}{Area\,of\,Test\,Piece\,(m^2)} \qquad (1)$$

3. For a fibrous structure or wipe sample, report the numerical average basis weight for all test pieces.

4. If only a limited amount of the fibrous structure or wipe is available, basis weight may be measured and reported as the basis weight of one test piece, the largest rectangle possible.

5. If measuring a core layer (core component), a scrim layer (scrim component), or a combination of core and scrim layers, the respective layer is collected during the making operation without the other layers and then the basis weight of the respective layer is measured as outlined above.

Three-Dimensional Fibrous Structure

The three-dimensional fibrous structure comprises a construction of at least one sheet and at least one gather strip element. The sheet and gather strip element are preferably joined in face-to-face relationship with at least one permanent bond to form a laminate. Examples of suitable three-dimensional fibrous structures are shown in US 9,833,118 B2.

The sheet may serve as a chassis for attachment of the gather strip element thereto. Other laminae and features may be interposed between the sheet and gather strip element.

The sheet may particularly comprise a synthetic nonwoven sheet. A sheet having synthetic fibers provides for convenient joining of the gather strip element thereto. Nonwovens include spun bonded, carded and airlaid materials, as are known in the art and made from synthetic fibers. A suitable nonwoven sheet may be made according to US 6,797,357.

Preferably the sheet comprises cellulose, to provide absorptive capacity. A cellulosic sheet may have permanent wet strength resin added thereto, as is known in the art. Or the sheet may preferably comprise a mixture of cellulosic and synthetic fibers, to provide both absorptive and barrier properties, and for convenient joining of the gather strip element. By cellulosic it is meant that the component comprises a predominant weight percentage of cellulosic fibers.

The sheet and/or gather strip element may be hydrophilic, to advantageously absorb water from the surface being cleaned. By hydrophilic it is generally meant that the component will absorb water in use and retain such water in ordinary use without the application of excessive compressive force.

For example, if the gather strips are 100% cellulose a wet co-efficient of friction may be so great it is difficult for a user to move the fibrous structure across a particular target surface. By intermixing different materials surface area for soil collection can be maintained while the wet coefficient of friction is optimized. Likewise, using gather strips of varying lengths, even with the same material, can increase cleaning surface area without unduly increasing wet coefficient of friction, providing for ease of movement across the target surface.

The sheet may comprise a laminate of two, three or more plies. The laminate may particularly comprise three plies, an outwardly facing ply, a central ply/core for absorption and an inwardly facing ply for joining to the gather strip element.

The outwardly facing ply may comprise a hydroentangled spunbond nonwoven with a basis weight of 20 to 80 gsm. A 45 gsm nonwoven from Avgol Nonwovens of Tel-Aviv, Israel has been found suitable. As used herein a nonwoven is a component having a mixture of airlaid and/or wetlaid fibers not woven together.

The central ply/core may serve as a storage reservoir, to absorb and retain biofilm and/or planktonic contamination collected from the target surface by the gather strip element. The central ply/core may comprise a bicomponent cellulose/synthetic airlaid. A 135 gsm airlaid comprising 85:15 cellulose:bicomponent fibers available from Suominen of Helsinki, Finland is suitable.

The central ply/core may further comprise absorbent gelling materials [AGM], as are known in the art. The AGM may increase retention of absorbed liquid and provide for increased capacity of cleaning.

The inwardly facing ply may comprise a mixture of wet laid fibers formed into a tissue which is bonded onto a synthetic nonwoven using process such as spun lace or hydroentangling. The inwardly facing ply may comprise 23gsm tissue with a 17 gsm polypropylene spunbond as a composite, sold under the name Genesis tissue by Suominen of Helsinki, Finland.

If desired, a dedicated core may be incorporated into the fibrous structure. The dedicated core may be between any of the plies of the sheet or disposed on the inwardly or outwardly oriented face of the sheet. The core may particularly comprise the central ply. The core and/or additional/alternative central ply may be narrower than the outwardly facing ply and inwardly facing ply. The core and/or central ply may be about half of the width of the outwardly facing ply and inwardly facing ply, and centered on the longitudinal axis.

The width of the core and/or sheet and gather strip element is measured as follows. The fibrous structure is placed on a flat, horizontal surface. Wrinkles and other disruptions to general planarity are smoothed out. The cleaning article is held taut by fingertips. A Steel Rule, Slide Calipers or Toolmakers' Grade Square, as are commonly available from L.S. Starrett Co. of Athol, MA. is used to measure the width between opposed ends of the gather strips and the core. Outwardly facing plies and layers may be removed, as necessary, to provide unobstructed access for the measurements.

The width of the core is measured in the transverse direction, parallel to the transverse axis. If the core has variable width, the width is measured at the narrowest point. The width of the gather strip element is also measured in the transverse direction. The width of the gather strip element is measured between the distal ends of opposed gather strips oppositely disposed across the longitudinal axis and lying in the XY plane. If the gather strip element, and particularly the opposed ends of the gather strips has variable width, the width is measured at the widest point. A difference in width of at least 4, 6, 8, 10, 12 or 14 cm, equally divided across the longitudinal axis, is believed suitable for the embodiment described herein.

The difference in width between the opposed gather strips and the core is believed to promote stability of the core and/or central ply, for retaining liquids transferred from the gather strip element. Furthermore, this geometry is believed to assist in draining the gather strips of absorbed liquid. Further, this geometry provides a gap, which is believed to promote movement of the gather strips, presenting different portions thereof to the target surface in response to user movement of the fibrous structure during ordinary use.

The three plies may be permanently joined together using adhesive and/or thermal bonds as are known in the art to form a sheet.

The fibrous structure may further comprise hydrophilic gather strips disposed in the gather strip element. As used herein, gather strips refer to cantilevered strips extending outwardly from proximal ends to respective distal ends. The individual gather strips may have a proximal end at or offset from the longitudinal centerline of the fibrous structure, and having a length (taken in the transverse direction) greater than the corresponding width (as taken in the longitudinal direction), to provide an aspect ratio of at least 1 and optionally 2 to 20, and optionally 5 to 15. The gather strips may have a length, taken from a respective proximal end juxtaposed with a bond to a respective distal end, which may be juxtaposed with a transverse edge of the cleaning article, of 3 to 15, 4 to 12 or particularly 5 to 8 cm, and a width of 3 to 20, 4 to 15 or particularly 6 to 8 mm. These particular dimensions have been found suitable for use in the method of the invention.

The gather strips lie within the XY plane as intended by manufacture, although may be deformed out of the XY plane due to fluffing before use, and/or deformations which occur in use due to movement against the target surface. The gather strips may be incorporated into one of the sheets described herein or may be deployed on a separate sheet. The gather strips may extend parallel to the width direction of the article, or may be disposed in acute angular relationship thereto. The gather strips may be straight, as shown, curved, serpentine or of any desired shape.

The gather strip element may comprise the same materials as described above for inwardly facing ply, and particularly be hydrophilic, and more particularly cellulose. The gather strip element and/or the sheet may alternatively or additionally comprise micro fiber, as is known in the art.

The gather strip element may comprise one or more plies folded back on itself in serpentine fashion. This arrangement provides at least a double, triple or greater thickness. When the layer is cut into generally transversely oriented individual gather strips, the double thickness provides a loop at the distal end of a respective strip. The loop is believed to be advantageous, as it helps to space apart strips overlaid in the Z-direction.

The folded configuration may be accomplished with a c-fold. One of skill will recognize that c-folds may be cascaded to provide a z-fold, w-fold or other plural layer folds as are known in the art and which encompass a c-fold.

The gather strip element may comprise from 2 to 25, 5 to 20, and particularly about 10 layers 27 of gather strips, depending upon the desired absorbent capacity and texture of the intended target surface. The gather strips disposed on each edge, particularly the longitudinal edges may advantageously comprise loops at the distal ends and a free end having a single thickness at the distal ends of the gather strips to provide differential response during cleaning and prophetically reach and retain more debris during cleaning.

Particularly, the differential response of the gather strips is believed to present a dynamically changing surface area to the target surface during cleaning, under normal usage conditions. By changing the surface area, more biofilm and/or planktonic contamination can be removed.

Arrangement providing relatively longer gather strips on the target surface and shorter gather strips inward thereof can provide benefits. It is believed that having different lengths of gather strips improves the removal efficacy by allowing the gather strips to move independently of each other and create separation therebetween. Such separation between gather strips, and particularly presenting gather strips in superimposed layers, is believed important in providing sufficient area to surface being cleaned, for biofilm and/or planktonic contamination to be both efficaciously picked up and retained by the fibrous structure. Thus the layers may be made with a single fold, plural folds, or by simple superposition with no folds.

The gather strip element may be joined to the sheet using a sinusoidally shaped bond, zigzag bond, all of which are collectively referred to as a serpentine bond or other non-straight bond. These bond patterns provide both relatively longer and relatively shorter individual gather strips. Also, the gather strips each have a respective proximal end which is not parallel to the longitudinal axis. This geometry provides a proximal end which is believed to promote twisting and disruption of the gather strip during removal.

Alternatively, the central bond may comprise an array of discrete bonds. Discrete bonds are believed to promote the dynamically changing presentation of the gather strip element to the target surface during ordinary use.

The differential length gather strips are believed to present different strips and/or portions thereof to the target surface in use. The irregular proximal ends of the gather strips are also believed to present different strips, or portion thereof, to the target surface in use.

Generally, by presenting different gather strips and/or different portions of gather strips, to the target surface in use, it is believed that saturated portions of the cleaning article do not remain in contact with the target surface. Different portions of the gather strip element are presented in use, minimizing re-deposition and allowing unsaturated portions of the gather strip element to contact, absorb and retain liquid from the target surface. By dynamically changing the effective portions of the gather strip element which contact the target surface, improved cleaning is believed to occur. Significantly, the dynamically changing effective portions of the gather strip element occurs automatically and without user intervention, other than the normal back and forth strokes which are part of normal cleaning.

Preferably the fibrous structure is free of tow fibers.

If desired, the sheet may be covered by an outwardly facing liquid impermeable barrier. The barrier prevents absorbed liquids from contacting the user's hand, implement, etc. A suitable barrier includes LDPE film as is known in the art.

The gather strip element may comprise a serpentine folded member with the width decreasing as the distal edge of the gather strip element is approached. This geometry provides an inverted pyramidal construction, in use. Such a construction of the gather strip element may provide for plural layers of the gather strip element having plural widths. The widths may decrease from the first layer to the distal layers and may particularly monotonically decrease in width from the first layer to the distal layers. The inverted pyramidal construction is believed to advantageously present more edges to the target surface during cleaning.

The fibrous structure may be free of a common bond which joins all layers of the gather strip element to the sheet. Instead, a first bond may join one or more proximal layers to the sheet. A second bond may join one or more distal layers to the proximal layers, without joining the distal layers directly to the sheet. This arrangement provides the benefit that if the fibrous structure is particularly thick in the z-direction, a bond through all components thereof is avoided.

The gather strip element may comprise two sheets of material, each sheet having an open c-fold. This arrangement is believed to advantageously provide a generally symmetrically opposite geometry, which aids removal of biofilm and/or planktonic contamination with a common back and forth motion, and provides a fibrous structure of generally equal thickness.

The gather strip element may comprise two sheets of material, each sheet having a z-fold with shortened outer legs. This arrangement is believed to advantageously provide a generally symmetrically opposite geometry. Each longitudinal edge of the fibrous structure has two c-fold which provide a loop gather strip and two free ends of gather strips. This arrangement, providing both free ends and loop ends of the gather strips and generally constant thickness, is believed to aid removal of biofilm and/or planktonic contamination with a common back and forth motion.

EXAMPLES

Examples of ready-to-use compositions and physical parameters of the present invention are shown in Table 1.

EP 3 782 741 B1

TABLE 1

| Composition | A* (Baby Wipe) | B* (Chicopee) | C | D | E | F | G | H |
|---|---|---|---|---|---|---|---|---|
| Composition | 80% Polypropylene 20% Lyocell Rayon Tribbal | PET/Polyamide | Mixed Pulp/Polypropylene Core | Mixed Pulp/Polypropylene Core | Mixed Pulp/Polypropylene Core | Mixed Pulp/Polypropylene Core | Mixed Pulp/Polypropylene Core | Mixed Pulp/Polypropylene |
| Texture | Wave embossed | NA | Large Bowtie Embossed | Small Bow-Tie Embossed | Butterfly & Heart Embossed | Channel | Bubble | Flat |
| No of Plies | 1 | 1 | 2 | 1 | 1 | 2 | 2 | 5 |
| Basis weight (gm) | 52 | 60 | 176 | 67 | 65 | 90 | 90 | 225 |
| Outer Scrim (s) gm | 0 | 0 | 8 | 8 | 2 | 8 | 8 | 0 |
| Inner Scrim (s) gm | 0 | 0 | 2 | 2 | 2 | 2 | 2 | 0 |
| Hydrophobicity of outer scrim | NA | NA | Hydrophobic | Hydrophobic | Hydrophobic | Hydrophobic | Hydrophobic | NA |

8

Table 2 shows the biofilm removal performance of fibrous structures A-F, examples A and B are comparative examples. They represent commercially available wipes. Examples C-G represents two-dimensional fibrous structures of the method of the invention and Example F represents two-dimensional fibrous structures of the method of the invention. Three measures are used: Planktonic Removal, Planktonic contamination and Planktonic transfer.

Planktonic Removal

This method measures the cleaning performance of wipe substrates, relative to their physical cleaning abilities with water to "Trap & Lock" planktonic microbes from surfaces versus baseline planktonic contamination (enumerations and impressions of contaminated tiles before and after cleaning with the wipes) to dimensionalize the amount of bioburden that is captured or cleaned by each substrate/system.

Part I: Substrate Cleaning Performance

This investigation consisted of substrate cleaning and microbial transfer versus a Planktonic contamination. Glass tiles, simulating a glass shower door, were inoculated with a 24-hour culture of the Planktonic, Gram-negative bacillus, *Serratia marcescens.* Visual detection of *S. marcescens* provided a confirmative indication of microbial transfer, distinguishing cross-contamination from the bioburdens that are typically associated with the use of non-sterile substrates and wipe "juices" or lotions (water, Clean-Shield-and-Enhance, and Lysol®/Quats). Each substrate was cut to the dimensions of the abrasion boat and pre-saturated with 3.2 gram per square meter (gsm) of lotion and remained in contact for four days prior to testing. Duplicate sets of Planktonic-contaminated glass tiles were prepared for each of the 5 substrate technologies. All of the Cleaning assays were performed using a Gardner Abrasion Tester, that was weighted to simulate hand pressure and set for a 5-second, up-and-back, single-cleaning pass, similar to the methodology specified by Clorox for assessment of residual hostility. Following substrate cleaning, the glass tile was processed through; 1) conventional microbial enumerations (serial dilutions and plating), or 2) physically imprinted onto a solid growth media plate by gently touching the cleaned surface of the glass tile to the microbial medium so that any remaining microbes were transferred and their growth visually detected following overnight incubation at ambient room conditions. Cleaning performance comparisons were assessed visually relative to the agar impressions of the baseline tile controls.

*Serratia marcescens (ATCC 14756)* was inoculated into a ten (10) milliliter tube of TSB and incubated for 24 hours at 37°C. Individual glass chamber slides were inoculated with thirty (30) microliters of a 24-hour *Serratia marcescens (ATCC 14756)* culture suspension. The inoculum was spread via a sterile inoculating loop over the entire surface of the glass slide and then allowed to air dry for approximately ten (10) minutes. Each of the wipe technologies were cut into 2 x 8.5-inch strips and placed into a 4.5 x 8.75-inch stainless steel pan. Approximately 3.2 grams of the prototype lotion was added to each wipe by weight. The wipe technologies were placed into individual, sterile stomacher bags and allowed to remain in contact with the prototype lotion for approximately one week. To simulate the microbial challenge and physical interactions that repeatedly confront surfaces in the home, an abrasion tester was used. "Cleaning" of the wipe technologies on the glass chamber slides was evaluated following a planktonic challenge. Prior to cleaning, each glass chamber slide was disassembled. Two glass slides (previously inoculated with Serratia) were cleaned simultaneously; one slide was quantified through microbial enumeration, while the other was used as a qualitative piece through visualization. The abrasion tester was set to a speed of 2.25 to 2.5 for a total surface contact time of approximately 4-5 seconds, for one complete cycle. One pass on the abrasion tester provided contact time with each tile of approximately seven (7) seconds. A cycle pass equals one pass to the left and a return pass to the right using a standardized abrasion tester. After the first cleaning, the slides were removed and assessed appropriately. Prior to the second cycle pass, two sterile glass tiles were placed on the Gardner tester, and the wipe substrate from the first cycle pass was allowed to remain on the abrasion tester for a second cycle pass to evaluate for potential microbial transfer. Between each cleaning, foam and wipe substrates were replaced. Each chamber slide was prepared for a cycle pass by attaching each wipe substrate and foam wiper to the abrasion boat assembly. The wipe substrates were weighed prior to the abrasion boat assembly to ensure reasonable similarity and correlation of the test articles. The pre-moistened abrasion boat was attached to the abrasion tester apparatus.

The Abrasion Tester was decontaminated between technologies by spraying the surface holder on the Gardner apparatus with Dispatch® Hospital Cleaner (0.65% Sodium Hypochlorite) between each set of surface wears to prevent carryover contamination. The Dispatch® disinfectant was allowed to completely dry followed by a water rinse before proceeding (at least 5 minutes) to the next wipe technology.

Quantification of Planktonic Microbial Levels

Planktonic-contaminated glass chamber slides/tiles were assessed before cleaning (baselines) and immediate following cleaning with each wipe technology. Each slide/tile to be enumerated for microbial levels was removed and placed into a fifty (50) milliliter centrifuge tube containing nine (9) milliliters of sterile saline. The tube was vortexed for approximately 20 seconds to disperse the microbes; and serial dilutions were prepared by transferring 1mL aliquots into 9mL of sterile saline (10-1 - 10-7). One-milliliter aliquots (1 ml) of the 101, 10-3, 10-5, & 10-7 dilutions were then plated onto separate solid nutrient growth media plates (TSA) via sterile inoculating loops. The TSA growth plates were incubated at 35°C temperature for 24 hours and enumerated manually, counting only those plates with 30 - 300 colonies for statistical representation versus limits of detection.

Planktonic Contamination

This method dimensions the cross-contamination potential of these same wipe substrates by measuring the amount of microbes transferred from the contaminated wipe post-cleaning to a fresh, sterile surface.

Part II: Microbial Transfer to Sterile Surfaces

Each of the test article substrates employed for cleaning (Part 1), were used to wipe a fresh, sterile glass tile via the Gardner Abrasion Tester that was weighted to simulate hand pressure and set for a 5-second, up-and-back, single-cleaning pass. These glass tiles were imprinted onto solid growth plates so that any microbes that were transferred from each used wipe substrate to the sterile tile were visualized. The glass tile impressions on the solid growth media plates were incubated overnight at ambient temperature and visually assessed for the presence of the red-colored S. marcescens colonies, which was indicative of substrate/lotion transfer of planktonic contamination from a used wipe to a sterile surface.

The planktonic contamination dimensions the cross-contamination potential of these same wipe substrates by measuring the amount of microbes transferred from the contaminated wipe post-cleaning to a fresh, sterile surface. Prior to the second cycle pass, two sterile glass tiles were placed on the Gardner tester, and the wipe substrate from the first cycle pass was allowed to remain on the abrasion tester for a second cycle pass to evaluate for potential microbial transfer. Between each cleaning, foam and wipe substrates were replaced. Each chamber slide was prepared for a cycle pass by attaching each wipe substrate and foam wiper to the abrasion boat assembly. The wipe substrates were weighed prior to the abrasion boat assembly to ensure reasonable similarity and correlation of the test articles. The pre-moistened abrasion boat was attached to the abrasion tester apparatus.

The Abrasion Tester was decontaminated between technologies by spraying the surface holder on the Gardner apparatus with Dispatch® Hospital Cleaner (0.65% Sodium Hypochlorite) between each set of surface wears to prevent carryover contamination. The Dispatch® disinfectant was allowed to completely dry followed by a water rinse before proceeding (at least 5 minutes) to the next wipe technology.

Planktonic Transfer

This method qualitatively measures the microbial transfer from each wipe to gloved fingers (impressions of gloved fingers before and after use of each wipe) to assess the risk of wipes becoming an in-use vector.

Part III. Substrate Transfer of Microbial Contamination to Hands

The hygienic cleaning performance of 5 substrates (saturated with water or Clean-Shield-and-Enhance, or Lysol® All Purpose Cleaner) was dimensioned versus a Planktonic Contamination. Glass tiles, simulating a glass shower door, were inoculated with a 24-hour culture of the Planktonic, Gram-negative bacillus, *Serratia marcescens.* Using nitrile-gloved hands, one set of the contaminated glass tiles were physically cleaned with a fresh sample of each test article substrate by placing four-gloved fingers on top of wipe and with gentle hand pressure, cleaning the tile with a 5-second, up-and-back, single-cleaning pass. Following cleaning, the wipe substrates were discarded, and the gloved fingers were pressed onto a nutrient agar plate (TSA-Total Aerobic bacteria). These agar impressions were incubated overnight at ambient room conditions, at which time the presence of any red colonies was noted, indicative of the *Serratia marcescens (ATCC 14756)* which had been present originally in the surface contamination that had been transferred to the gloved fingers.

| TABLE 2 | Comp A | Comp B | Comp C | Comp D | Comp E | Comp F | Comp G | Comp H |
|---|---|---|---|---|---|---|---|---|
| Planktonic Removal Log Red/Removal | 4.8 | 4.5 | 5.5 | 5.76 | 5.91 | 5.9 | 5.90 | 5.45 |

(continued)

| TABLE 2 | Comp A | Comp B | Comp C | Comp D | Comp E | Comp F | Comp G | Comp H |
|---|---|---|---|---|---|---|---|---|
| Planktonic contamination Log transferred | 4.8 | 4.8 | 2.91 | 2.45 | 2.99 | 2.99 | 2.45 | 2.76 |
| Planktonic transfer by hands (visual grading) Low: + Heavy: +++++ | + | ++ | ++++ | + +++ | + + + + | + + + + | ++++ | ++++ |

As it can be seen from the table above. Planktonic removal is lower and planktonic contamination transferred is higher when a fibrous structure outside the scope of the invention (Examples A* and B*) is used as compared to the fibrous structure of the invention (Examples C and G).

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

**Claims**

1. A method of reducing biofilm and/or planktonic contamination from a surface using a fibrous structure, the method comprising the steps of:

    i) applying water to the surface or to the fibrous structure wherein the water comprises less than 5% by weight of chemicals apart from those coming from the water supply; and
    ii) wiping the surface with the fibrous structure; and

    wherein the fibrous structure is:

    a) a two-dimensional fibrous structure comprising a core and a scrim wherein the core is more hydrophilic than the scrim; or
    b) a three-dimensional fibrous structure comprising a sheet and a gather strip element joined to the sheet, the gather strip element comprising plural superimposed layers folded upon one another, a plurality of said layers having strips extending outwardly.

2. A method according to claim 1 wherein the core of the two-dimensional fibrous structure is placed between two scrims.

3. A method according to any of claims 1 or 2 wherein the core of the two-dimensional fibrous structure comprises a mixture of pulp and a hydrophobic polymer and wherein the pulp and hydrophobic polymer are in a weight ratio of from 60:40 to 90:10.

4. A method according to any of the preceding claims wherein the outer surface of the two-dimensional structure is embossed.

5. A method according to any of the preceding claims wherein the core of the two-dimensional fibrous structure exhibits a basis weight of from 50 gsm to 200 gsm and the scrim component of the two-dimensional fibrous structure exhibits a basis weight of from 5 gsm to 20 gsm.

6. A method according to claim 1 wherein the outwardly extending strips of the three-dimensional fibrous structure comprises free moving strips.

7. A method according to the preceding claim wherein the sheet of the three-dimensional fibrous structure is a non-woven sheet.

8. A method according to the preceding claim wherein the gather strip element is hydrophilic and comprises cellulose fibres.

9. A method according to the preceding claim wherein gather strip element of the three-dimensional fibrous structure comprises at least three superimposed layers.

10. A method according to the preceding claim wherein the three-dimensional fibrous structure further comprises a core element joined to the sheet.

11. A method according to any of the preceding claims wherein the water is applied to the surface by means of spray.

**Patentansprüche**

1. Verfahren zum Reduzieren von Biofilm- und/oder planktonischer Kontamination von einer Oberfläche unter Verwendung einer Faserstruktur, das Verfahren umfassend die Schritte:

   i) Aufbringen von Wasser auf die Oberfläche oder auf die Faserstruktur, wobei das Wasser weniger als 5 Gew.-% Chemikalien umfasst, abgesehen von denen, die aus der Wasserzufuhr kommen; und
   ii) Abwischen der Oberfläche mit der Faserstruktur; und

   wobei die Faserstruktur ist:

   a) eine zweidimensionale Faserstruktur, umfassend einen Kern und ein Scrim, wobei der Kern hydrophiler als das Scrim ist; oder
   b) eine dreidimensionale Faserstruktur, umfassend eine Lage und ein Raffstreifenelement, das mit der Lage verbunden ist, das Raffstreifenelement umfassend vielzählige übereinander angeordnete Schichten, die aufeinander gefaltet sind, wobei eine Vielzahl der Schichten Streifen aufweist, die sich nach außen erstrecken.

2. Verfahren nach Anspruch 1, wobei der Kern der zweidimensionalen Faserstruktur zwischen zwei Scrims platziert ist.

3. Verfahren nach einem der Ansprüche 1 oder 2, wobei der Kern der zweidimensionalen Faserstruktur eine Mischung aus Zellstoff und einem hydrophoben Polymer umfasst und wobei der Zellstoff und das hydrophobe Polymer in einem Gewichtsverhältnis von 60 : 40 bis 90 : 10 sind.

4. Verfahren nach einem der vorstehenden Ansprüche, wobei die Außenoberfläche der zweidimensionalen Struktur mit Prägungen versehen ist.

5. Verfahren nach einem der vorstehenden Ansprüche, wobei der Kern der zweidimensionalen Faserstruktur ein Flächengewicht von 50 Gramm pro Quadratmeter bis 200 Gramm pro Quadratmeter vorweist und der Scrim-Bestandteil der zweidimensionalen Faserstruktur ein Flächengewicht von 5 Gramm pro Quadratmeter bis 20 Gramm pro Quadratmeter vorweist.

6. Verfahren nach Anspruch 1, wobei die sich nach außen erstreckenden Streifen der dreidimensionalen Faserstruktur freie bewegliche Streifen umfassen.

7. Verfahren nach dem vorstehenden Anspruch, wobei die Lage der dreidimensionalen Faserstruktur eine Vlieslage ist.

8. Verfahren nach dem vorstehenden Anspruch, wobei das Raffstreifenelement hydrophil ist und Cellulosefasern umfasst.

9. Verfahren nach dem vorstehenden Anspruch, wobei das Raffstreifenelement der dreidimensionalen Faserstruktur wenigstens drei übereinander angeordnete Schichten umfasst.

10. Verfahren nach dem vorstehenden Anspruch, wobei die dreidimensionale Faserstruktur ferner ein Kernelement umfasst, das mit der Lage verbunden ist.

11. Verfahren nach einem der vorstehenden Ansprüche, wobei das Wasser mittels Sprühstoß auf die Oberfläche aufgebracht wird.

**Revendications**

1. Procédé de réduction de contamination par biofilm et/ou planctonique d'une surface à l'aide d'une structure fibreuse, le procédé comprenant les étapes de :

    i) application d'eau sur la surface ou sur la structure fibreuse dans lequel l'eau comprend moins de 5 % en poids de produits chimiques autres que ceux provenant de l'alimentation en eau ; et
    ii) essuyage de la surface avec la structure fibreuse ; et
    dans lequel la structure fibreuse est :

        a) une structure fibreuse bidimensionnelle comprenant un coeur et un canevas dans lequel le coeur est plus hydrophile que le canevas ; ou
        b) une structure fibreuse tridimensionnelle comprenant une feuille et un élément bande de collecte relié à la feuille, l'élément bande de collecte comprenant plusieurs couches superposées repliées les unes sur les autres, une pluralité desdites couches ayant des bandes s'étendant vers l'extérieur.

2. Procédé selon la revendication 1, dans lequel le coeur de la structure fibreuse bidimensionnelle est placé entre deux canevas.

3. Procédé selon l'une quelconque des revendications 1 ou 2, dans lequel le coeur de la structure fibreuse bidimensionnelle comprend un mélange de pâte et d'un polymère hydrophobe et dans lequel la pâte et le polymère hydrophobe se trouvent dans un rapport en poids allant de 60:40 à 90:10.

4. Procédé selon l'une quelconque des revendications précédentes, dans lequel la surface externe de la structure bidimensionnelle est gaufrée.

5. Procédé selon l'une quelconque des revendications précédentes, dans lequel le coeur de la structure fibreuse bidimensionnelle présente une masse surfacique allant de 50 g/m2 à 200 g/m2 et le composant canevas de la structure fibreuse bidimensionnelle présente une masse surfacique allant de 5 g/m2 à 20 g/m2.

6. Procédé selon la revendication 1, dans lequel les bandes s'étendant vers l'extérieur de la structure fibreuse tridimensionnelle comprennent des bandes à mouvement libre.

7. Procédé selon la revendication précédente, dans lequel la feuille de la structure fibreuse tridimensionnelle est une feuille non tissée.

8. Procédé selon la revendication précédente, dans lequel l'élément bande de collecte est hydrophile et comprend des fibres de cellulose.

9. Procédé selon la revendication précédente, dans lequel l'élément bande de collecte de la structure fibreuse tridimensionnelle comprend au moins trois couches superposées.

10. Procédé selon la revendication précédente, dans lequel la structure fibreuse tridimensionnelle comprend en outre un élément coeur joint à la feuille.

11. Procédé selon l'une quelconque des revendications précédentes, dans lequel l'eau est appliquée sur la surface au moyen d'une pulvérisation.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016250668 A1
- US 9833118 B2
- US 6797357 B